# EUROPÄISCHE PATENTANMELDUNG

(11) **EP 1 184 650 A1**
(43) Veröffentlichungstag der Anmeldung: **06.03.2002**
(21) Anmeldenummer: 01114178.5
(22) Anmeldetag: 12.06.2001
(51) Int. Cl.: G01L 9/14, G01L 9/00

(54) **Drucksensor**

(30) Priorität: 09.08.2000 DE 10039609
(71) Anmelder: Siemens Aktiengesellschaft, 80333 München (DE)
(72) Erfinder: Schmidt, Norbert, 65817 Eppstein (DE); Acht, Joachim, 65936 Frankfurt/Main (DE)
(74) Vertreter: Richter, Jürgen, Dipl.-Phys. Dr.

(57) **Zusammenfassung**

Bei einem Drucksensor, insbesondere in einem Kraftfahrzeug, mit einem Sensorgehäuse (2) und einem Sockel (1) führt eine Druckbohrung (4) zu einem Druckraum (5), der auf einer Seite von dem Sockel (1) und auf der gegenüberliegenden Seite von einer dichtend mit dem Sockel (1) verbundenen Membran (7) begrenzt ist, die auf ihrer dem Druckraum (5) abgewandten Seite ein Betätigungselement (9) zum berührungslosen Betätigen eines Sensorelementes (14) trägt. Zum Schutz vor einer Leckage bei einem Bruch der Membran (7) sind die Membran (7) und das Betätigungselement (9) von einer dichtend mit dem Sockel (1) verbundenen Dichtkappe (10) umschlossen.

## Beschreibung

Die Erfindung betrifft einen Drucksensor, insbesondere in einem Kraftfahrzeug, mit einem Sensorgehäuse und einem Sockel, durch den hindurch eine Druckbohrung zu einem Druckraum führt, der auf einer Seite von dem Sockel und auf der gegenüberliegenden Seite von einer dichtend mit dem Sockel verbundenen Membran begrenzt ist, die auf ihrer dem Druckraum abgewandten Seite ein Betätigungselement zum berührungslosen Betätigen eines Sensorelementes trägt.

Drucksensoren der vorstehenden Art werden in der Technik für unterschiedliche Aufgaben eingesetzt und sind allgemein bekannt. Oftmals ist es bei solchen Drucksensoren wichtig, dass auch nach langem Einsatz Undichtigkeiten zuverlässig ausgeschlossen werden können. Das ist beispielsweise dann der Fall, wenn es sich bei dem den Drucksensor beaufschlagenden Medium um ein die unmittelbare Umgebung des Drucksensors oder die Umwelt schädigendes Medium, beispielsweise Hydraulikflüssigkeit, oder um ein feuergefährliches Medium, beispielsweise Kraftstoff, handelt. In einem Kraftfahrzeug kann aus einem Drucksensor austretender Kraftstoff zu einer Feuergefahr führen. Generell kann aus Drucksensoren austretendes Medium Steuereinrichtungen schädigen oder vorübergehend funktionsunfähig machen. Ein in Bezug auf eine Leckage besonders kritisches Bauteil stellt bei den Drucksensoren der eingangs genannten Art die Membran dar, weil es infolge häufiger Betätigung oder gar durch einen Materialfehler zu einem Membranbruch kommen kann, wodurch schlagartig eine große Undichtigkeit entsteht.

Zur Vermeidung der Gefahr eines Austritts von Medium aus einem Drucksensor könnte man diesen mit einer Kapselung versehen, ähnlich wie man im Erdreich einzubauende Öltanks doppelwandig ausführt. Eine solche Kapselung ist jedoch teuer und nicht völlig zuverlässig, weil aus ihr elektrische Leitungen dichtend herausgeführt werden müssten und die Kapselung auch gegenüber dem Sockel des Drucksensors abzudichten ist.

Der Erfindung liegt das Problem zugrunde, einen Drucksensor der eingangs genannten Art so auszubilden, dass er auf möglichst kostengünstige und zuverlässige Weise gegen Leckage geschützt ist.

Dieses Problem wird erfindungsgemäß dadurch gelöst, dass die Membran und das Betätigungselement von einer dichtend mit dem Sockel verbundenen Dichtkappe umschlossen ist.

Bei einem solchen Sensor wird hinter der Membran eine weitere druckdichte Absperrung des Druckraumes angeordnet. Da diese zweite Absperrung nur den Druckraum und das Betätigungselement umschließen muss, kann sie relativ klein ausgebildet werden, so dass sie weder die Kosten des Drucksensors noch sein Bauvolumen wesentlich erhöht.

Besonders vorteilhaft ist es, wenn gemäß einer Weiterbildung der Erfindung die Dichtkappe hutförmig ausgebildet ist und einen Flansch hat, welcher mit einem die maximale Durchbiegung der Membran begrenzenden Abstand zur Membran verläuft und die dichtende Verbindung mit dem Sockel bildet, und die im mittleren Bereich einen über das Betätigungselement führenden Zylinder hat. Durch diese Gestaltung bekommt die Abdichtkappe eine Doppelfunktion. Sie sorgt einerseits für eine Abdichtung im Falle eines Membranbruches, andererseits begrenzt sie die maximale Ausbeulung der Membran bei hohem Druck, so dass es auch bei Druckspitzen nicht zu einer Überdehnung der Membran und dadurch zu einem Membranbruch kommen kann.

Für die Anwendung in Hydrauliksystemen und allgemein im Kraftfahrzeug ist der Drucksensor besonders vorteilhaft gestaltet, wenn das Betätigungselement ein Magnet und das Sensorelement ein Hall-Element ist und die Dichtkappe aus einem nicht magnetischen Werkstoff besteht. Grundsätzlich könnte die Messung der Durchbiegung der Membran jedoch auch auf andere, berührungslose Weise erfolgen, beispielsweise induktiv oder kapazitiv.

Besonders kostengünstig ist der Drucksensor herstellbar und vermag ohne Korrosionsgefahr auch agressiven Medien zu widerstehen, wenn der Sockel, die Membran und die Dichtkappe aus Edelstahl bestehen.

Die Dichtkappe kann mit der Membran und dem Sockel auf besonders kostengünstige Weise dichtend verbunden werden, wenn die Dichtkappe mit der Membran und dem Sockel durch Schweißen dichtend verbunden ist.

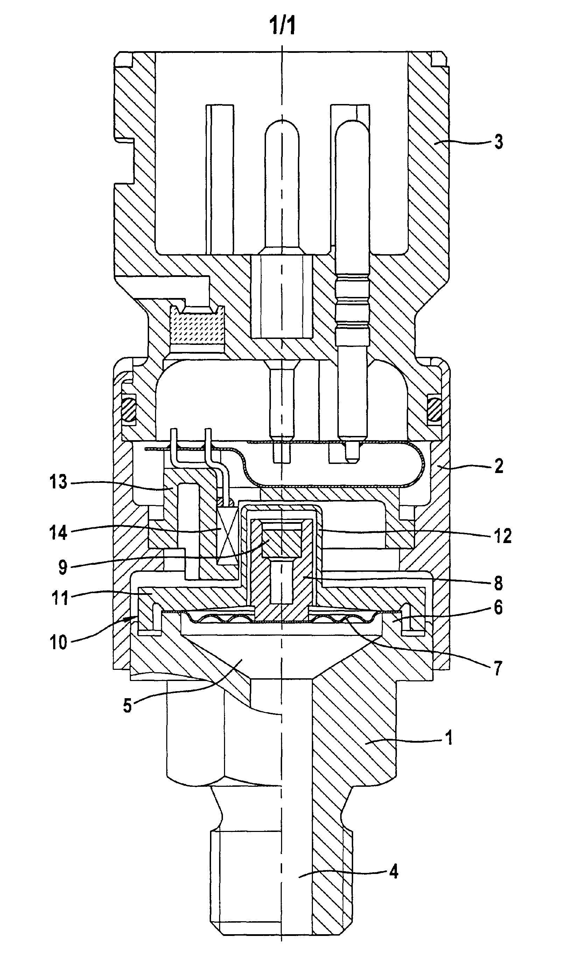

Die Erfindung lässt verschiedene Ausführungsformen zu. Zur weiteren Verdeutlichung ihres Grundprinzips ist in der Zeichnung ein erfindungsgemäß gestalteter Drucksensor im Längsschnitt dargestellt und wird nachfolgend beschrieben.

Der dargestellte Drucksensor hat einen Sockel 1, mit dem er in eine nicht gezeigte Gewindebohrung geschraubt werden kann. Dieser Sockel 1 wird von einem Sensorgehäuse 2 gehalten, das nach oben hin von einem Kontaktteil 3 dichtend verschlossen ist. In dieses Kontaktteil 3 lässt sich ein üblicher Bajonettstecker stecken, über den der Drucksensor seine erforderlichen elektrischen Verbindungen erhält.

In den Sockel 1 führt von unten her eine Druckbohrung 4 hinein zu einem Druckraum 5, welcher durch eine Ausnehmung in der oberen Stirnfläche des Sockels 1 gebildet ist und seitlich im oberen Bereich durch eine umlaufende Schulter 6 begrenzt wird. Diese Schulter 6 ist mit dem Rand einer den Druckraum 5 nach oben hin abdeckenden, elastischen Membran 7 verbunden. Auf der dem Druckraum 5 abgewandten Seite der Membran 7 sitzt auf dieser ein Abstandshalter 8, welcher ein Betätigungselement 9 haltert, bei dem es sich um einen Magneten handelt.

Wichtig ist eine hutförmige Dichtkappe 10. Diese besteht aus einem Flansch 11 und einem Zylinder 12. Der Flansch 11 liegt im Bereich der Schulter 6 auf der Membran 7 auf und hat im Bereich des Druckraumes 5 einen solchen Abstand von der Membran 7, dass ihre maximale Durchbiegung von dem Flansch 11 begrenzt wird. Sowohl der Sockel 1 als auch die Membran 7 und die Dichtkappe 10 bestehen vorzugsweise aus Edelstahl. Deshalb ist ein dichtendes Verbinden des Flansches 11 mit der Membran 7 und der Schulter 6 des Sockels 1 durch eine umlaufende Schweißverbindung möglich. Der Zylinder 12 der Dichtkappe 10 umschließt den Abstandshalter 8 mit dem Betätigungselement 9.

Im Sensorgehäuse 2 ist weiterhin ein Träger 13 ortsfest angeordnet, der ein Sensorelement 14 trägt, bei dem es sich um ein übliches Hall-Element handeln kann.

Wird der Druckraum 5 über die Druckbohrung 4 vom Messmedium druckbeaufschlagt, dann beult sie sich in Abhängigkeit vom Druck elastisch mehr oder minder stark nach oben. Dadurch bewegt sich der Abstandshalter 8 mit dem Betätigungselement 9 entsprechend weit nach oben. Diese Bewegung wird von dem Sensorelement 14, also dem Hall-Element, detektiert, so dass ein druckabhängiges Sensorsignal erzeugt wird.

Kommt es zu einem Bruch der Membran 7, dann gelangt das Messmedium lediglich bis gegen die Dichtkappe 10, so dass ein Austritt des Messmediums ausgeschlossen ist und deshalb keine Sensorleckage entsteht.

## Patentansprüche

1. Drucksensor, insbesondere in einem Kraftfahrzeug, mit einem Sensorgehäuse und einem Sockel, durch den hindurch eine Druckbohrung zu einem Druckraum führt, der auf einer Seite von dem Sockel und auf der gegenüberliegenden Seite von einer dichtend mit dem Sockel verbundenen Membran begrenzt ist, die auf ihrer dem Druckraum abgewandten Seite ein Betätigungselement zum berührungslosen Betätigen eines Sensorelementes trägt, **dadurch gekennzeichnet, dass** die Membran (7) und das Betätigungselement (9) von einer dichtend mit dem Sockel (1) verbundenen Dichtkappe (10) umschlossen ist.

2. Drucksensor nach Anspruch 1, **dadurch gekennzeichnet, dass** die Dichtkappe (10) hutförmig ausgebildet ist und einen Flansch (11) hat, welcher mit einem die maximale Durchbiegung der Membran (7) begrenzenden Abstand zur Membran (7) verläuft und die dichtende Verbindung mit dem Sockel (1) bildet, und die im mittleren Bereich einen über das Betätigungselement (9) führenden Zylinder (12) hat.

3. Drucksensor nach den Ansprüchen 1 oder 2, **dadurch gekennzeichnet, dass** das Betätigungselement (9) ein Magnet und das Sensorelement (14) ein Hall-Element ist und die Dichtkappe (10) aus einem nicht magnetischen Werkstoff besteht.

4. Drucksensor nach zumindest einem der vorangehenden Ansprüche, **dadurch gekennzeichnet, dass** der Sockel (1), die Membran (7) und die Dichtkappe (10) aus Edelstahl bestehen.

5. Drucksensor nach zumindest einem der vorangehenden Ansprüche, **dadurch gekennzeichnet, dass** die Dichtkappe (10) mit der Membran (7) und dem Sockel (1) durch Schweißen dichtend verbunden ist.
